(19) Europäisches Patentamt
European Patent Office
Office européen des brevets

(11) **EP 1 076 674 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(51) Int Cl.:
*C08G 65/48* (2006.01)  *C08L 71/00* (2006.01)
*B01D 71/82* (2006.01)  *B01D 71/68* (2006.01)
*H01M 8/02* (2006.01)  *H01M 8/10* (2006.01)

(21) Anmeldenummer: **99927652.0**

(22) Anmeldetag: **26.03.1999**

(86) Internationale Anmeldenummer:
**PCT/DE1999/000929**

(87) Internationale Veröffentlichungsnummer:
**WO 1999/048932 (30.09.1999 Gazette 1999/39)**

(54) **MODIFIZIERTES POLYMER UND MODIFIZIERTE POLYMERMEMBRAN**

MODIFIED POLYMER AND MODIFIED POLYMER MEMBRANE

POLYMERE MODIFIE ET MEMBRANE POLYMERE MODIFIEE

(84) Benannte Vertragsstaaten:
**AT BE CH CY DE DK ES FI FR GB GR IE IT LI LU MC NL PT SE**

(30) Priorität: **27.03.1998 DE 19813613**

(43) Veröffentlichungstag der Anmeldung:
**21.02.2001 Patentblatt 2001/08**

(73) Patentinhaber:
• **Häring, Thomas**
  **70619 Stuttgart (DE)**
• **Häring, Rima**
  **70619 Stuttgart (DE)**

(72) Erfinder:
• **KERRES, Jochen**
  **D-70199 Stuttgart (DE)**
• **CUI, Wei**
  **89182 Bernstadt (DE)**

(56) Entgegenhaltungen:
EP-A- 0 013 000    EP-A- 0 325 405
EP-A- 0 506 611    EP-A- 0 574 791
US-A- 4 086 209

Bemerkungen:
Die Akte enthält technische Angaben, die nach dem Eingang der Anmeldung eingereicht wurden und die nicht in dieser Patentschrift enthalten sind.

EP 1 076 674 B1

**Beschreibung**

1. Gegenstand der Erfindung

Gegenstand der Erfindung sind neue, sehr preisgünstige Verfahren zur Herstellung von:

- Arylpolymeren, die sowohl Nitrogruppen als auch Sulfonsäuregruppen oder sowohl Aminogruppen als auch Siffensäuregruppen enthalten.

Gegenstand der Erfindung sind dazu sehr preiswert herzustellende, neue modifizierte Arylpolymere und daraus Arylpolymermembranen:

- nitriertes und sulfoniertes Arylpolymer;
- aminiertes und sulfoniertes Arylpolymer;
- Blendmembranen aus den nenen Arylpolymeren.

Gegenstand der Erfindung ist des weiteren die Anwendung der neuentwickelten Arylpolymermembranen in Membranverfahren, insbesondere als polymerer Elektrolyt in Elektromembranverfahren, z.B. Elektrodialyse und PEM-Membranbrennstoffze. Da die erfindungsgemäßen Membranen hohe chemische und thermische Stabilitäben aufweisen, stellen sie eine preisgünstige Alternative zu den bislang in PEM-Brennstoffzellen hauptsächlich verwendeten sehr teuren perfluorierten Ionomemembranen vom Nafion-Typ dar.

2. Stand der Technik

In [1] ist die Herstellung von nitrierten Poly(etheretherketon) (PEEK-$NO_2$) durch Auflösung des PEEK in Methansulfonsäure und nachfolgende Nitrierung durch Zugabe von konzentrierter Salpetersäure beschrieben. Nachteil dieses Verfahrens ist die Verwendung von relativ teurer Methansulfonsäure als Lösungsmittel"

[2] beschreibt die Herstellung von amino-terminierten Poly(etheretherketon)-Pligomeren durch Nucleophilic Displacement Polymerization von 4,4'-Difluorobenzophenon mit Hydrochinon in Präsenz einen berechneten Überschusses an m-Aminophenol. Nachteil dieser Oligomere ist ein niedriger Gehalt an Aminogruppen, da nur die Endgruppen mit Aminogruppen modifiziert sind. Es existieren diverse Patente zur Herstellung von sulfoniertern Poly(etheretherketon) durch Auflösung des PEEK in konzentrierter Schwefelsäure, von denen [3] ein Beispiel ist. In [3] werden jedoch nur sulfonierte Poly(etheretherketon)e beansprucht.

Naik et al. [4] beschreiben die Herstellung und Eigenschaften von hauptketten-aminiertem Poly(ethersulfon) (PES) und Poly(etherethersulfon) (PEES), bei dem das aminierte Polymer durch Nitrierung der Grundpolymere mit Nitriersäure ($HNO_3/H_2SO_4$) in Nitrobenzol als Lösungsmittel und nachfolgender Reduktion der Nitrogruppe zur Aminogruppe dargestellt wurde. Nachteil dieses Verfahrens ist die Toxizität des Lösungsmittels Nitrobenzol.

Es gibt zahlreiche Arbeiten zur Nitrierung von Arylpolymeren, von denen hier die Arbeiten von Crivello [5] und Daly [6] genannt werden sollen. Die Autoren verwenden als Nitrierungsagens Ammoniumnitrat und Trifluoressigsäreanhydrid. Der Nachteil dieses Verfahrens ist der hohe Preis von Trifluoressigsäureanhydrid und die Explosionsgefährlichkeit von Ammoniumnitrat.

3. Mit der Erfindung gelöste Aufgabe und Verbesserung gegenüber dem Stand der Technik

Gegenstand der vorliegenden Erfindung sind die in den Ansprüchen 1, 2 und 4-7 dargelegten Verfahren sowie die hieraus erhältlichen Polymere.,die in den Ansprüchen 3 und 13 dargelegt sind.

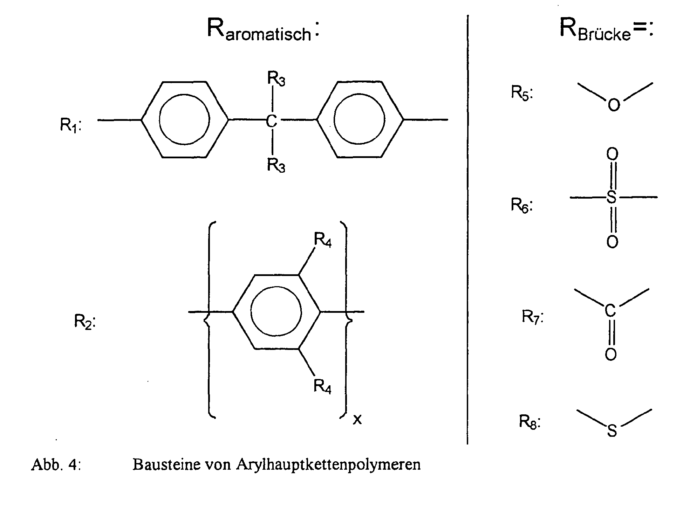

Die Arylhauptkeltenpolymere kannen aus den in Abbildung 4 dargelegten Bausteinen aufgebaut sein.

Beispiele für erfindungsgemäß modifizierbare Arylhauptkettempolymere sind einige wichtige kommerzielle Engineering-Thermoplasta, wie:

- Poly(etheretherketon) PEEK (Victrex®) ($[R_5-R_2-R_5-R_2-R_7]_n$; x=1, $R_4$=H),
- Poly(ethersulfon) PSU (Udel®) ($[R_1-R_5-R_2-R_6-R_2-R_5]_n$; $R_2$; x=1, $R_4$=H),
- Poly(ethersulfon) PES (VICTREX®) ($[R_2-R_6-R_2-R_5]_n$; $R_2$: x=1, $R_4$=H),
- Poly(phenylsulfon) (RADEL R®) ($[(R_2)_2-R_5-R_2-R_6-R_2])_n$; $R_2$: x=2, $R_4$=H),

- Polyetherethersulfon (RADEL A®) ($[R_5-R_2-R_5-R_2-R_6]_n$-$[R_5-R_2-R_6-R_2]_m$; $R_2$: x=1, $R_4$=H, $\frac{n}{m} = 0,18$),

- Poly(phenylensulfid) PPS ($[R_2-R_8]_n$; $R_2$: x=1, $R_4$=H)
- Poly(phenylenoxid) PPO ($[R_2-R_5]_n$; $R_4$=CH$_3$)
- Polyphenylen Poly-X 2000 ($[R_2]_n$, $R_{4}(_1)$ = H, $R_{4(2)}$ = 4-pherloxybenzoyl).

3.1 Herstellung von nitriertem Arylpolymer

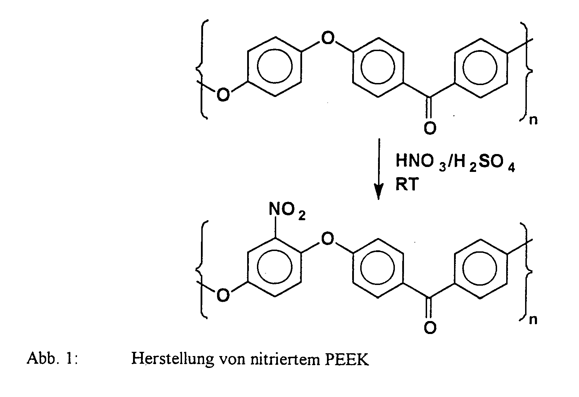

Bei dem Versuch einer Nitrierung von Poly(etheretherketon) durch Auflösung des PEEK in konzentrierter Schwefelsäure und nachfolgendes Zutropfen von 70%iger Salpetersäure (Abb. 1) wurde überraschend festgestellt, daß das Polymer nur nitriert und nicht sulfoniert wurde. Bei diesem Verfahren kommen nur preiswerte Massenchemikalien wie Schwefelsäure und Salpetersäure zur Anwendung.

3.2 Herstellung von sulfoniertem und nitriertem Arylpolymer

Es wurde überrascht festgestellt, daß man ein sulfoniertes und nitriertes Arylpolymer, beispielsweise sulfoniertes und nitriertes PEEK, auf zwei Wegen sehr einfach herstellen kann:

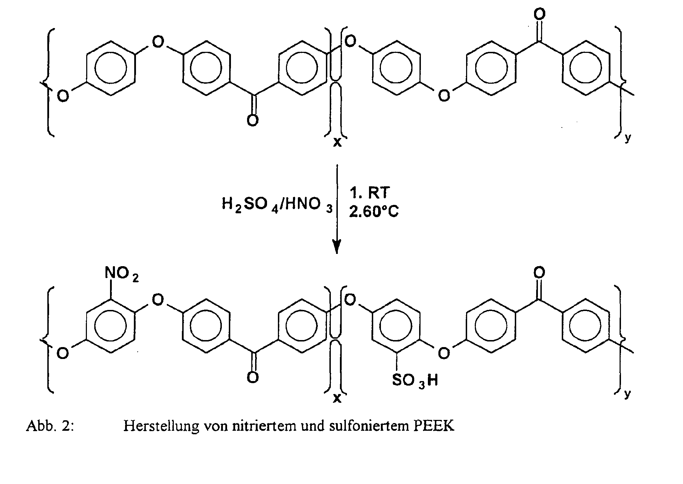

- Zuerst wird das Polymer, beispielsweise PEEK, bei Raumtemperatur in konzentrierter Schwefelsäure aufgelöst und mit konzentrierter Salpetersäure versetzt. Es findet nur Nitrierung statt. Danach wird das Polymer durch Ausfällung in Wasser isoliert, säurefrei gewaschen und bis zur Gewichtskonstanz getrocknet. Danach wird es erneut in konzentrierter Schwefelsäure aufgelöst und unter Rühren auf 60°C erwärmt. Es wird bei dieser Temperatur eine vorbestimmte Zeit gerührt. Danach wird das Polymer in Wasser ausgefällt, säurefrei gewaschen und bis zur Gewichtskonstanz getrocknet.
- Das Polymer wird in konzentrierter Schwefelsäure aufgelöst. Danach wird die gewünschte Menge Salpetersäure zugetropft. Nach einer vorbestimmten Rührzeit wird

die Reaktionstemperatur auf 60°C erhöht. Man läßt noch eine vorbestimmte Zeit rühren.
Danach wird das Polymer wie oben aufgearbeitet. Das Verfahren ist in Abb. 2 schematisch dargestellt.

3.3 Aminierung von sulfoniertem und nitriertem Arylpolymer

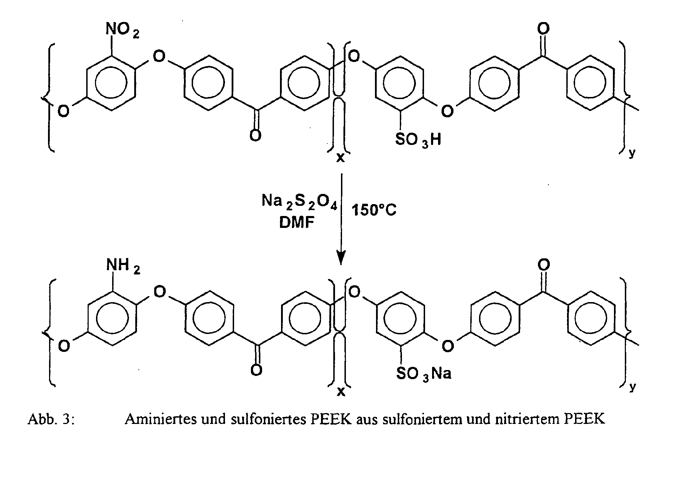

Es wurde überraschend festgestellt, daß man sulfoniertes und nitriertes PEEK nach einem für die Reduktion von nitrierten zu aminierten Polymeren geeigneten Verfahren [4] zu aminiertem und sulfoniertem PEEK reduzieren kann. Das Verfahren ist in Abb. 3 schematisch dargestellt.

Die primären Aminogruppen des entstandenen aminierten und sulfonierten Polymers können in weiteren Schritten nach bekannten Verfahren mit üblichen Alkylierungsmitteln zu quarternären Ammoniumgruppen alkyliert werden.

4. Ausführungsbeispiele:

4.1 Herstellung von nitriertem PEEK und PES

In einem Dreihalsglaskolben mit Rührer und Tropftrichter wurde 96%ige $H_2SO_4$ vorgelegt. Danach wurde in der Schwefelsäure PEEK bzw. PES unter Rühren bei Raumtemperatur gelöst. Danach wurden 70%ige $HNO_3$ in die Reaktionslösung eingetropft. Man ließ 3 h rühren. Danach wurde das Polymer in VE-$H_2O$ ausgefällt und säurefrei gewaschen. Man erhielt eine Ausbeute von jeweils über 90 Gew%. In Tab. 1 sind einige der Ansätze aufgeführt.

Tab. 1: Nitrierung von PEEK und PES

| Rkt. Nr. | Polymer und Menge [g] | Lösetemperatur [°C] | $H_2SO_4$ [ml] | $HNO_3$ [ml] | Reaktionstemp. [°C] | Nitrierungsgrad [%]* |
|---|---|---|---|---|---|---|
| PEEK-NO$_2$-1 | PEEK 26,6 | 25 | 150 | 10 | 25 | 30 |
| PEEK-NO$_2$-2 | PEEK 26,6 | 25 | 150 | 3 | 25 | 18,6 |
| PES-NO$_2$-1 | PES 21,4 | 25 | 150 | 6 | 60 | 68,5 |
| * % der Polymer-Wiederholungseinheiten, mittels Elementaranalyse bestimmt | | | | | | |

4.2 Herstellung von nitriertem und sulfoniertem PEEK

Vom mittels der Reaktion 4.1 erhaltenen nitrierten PEEK (Probe PEEK-NO$_2$-2) werden 24 g in 150 ml 96%iger Schwefelsäure in einer 3-Hals-Rührapparatur gelöst. Nach der Auflösung wird die Reaktionstemperatur auf 60°C erhöht und die Reaktionsmischung gerührt. Nach festgelegten Zeiten werden von der Reaktionslösung Proben entnommen, ausgefällt, säurefrei gewaschen, getrocknet und hinsichtlich Sulfonierungsgrad mittels Titration analysiert.

In der Tab. 2 sind die Charakterisierungsdaten der nach unterschiedlichen Reaktionszeiten entnommenen Polymerproben aufgeführt.

Tab. 2: Sulfonierung von nitriertem PEEK

| Probe Nr. | Reaktionszeit [min.] | IEC [meq SO$_3$H/g] |
|---|---|---|
| PKNS-1 | 170 | 0,78 |
| PKNS-2 | 240 | 0,82 |
| PKNS-3 | 325 | 0,96 |
| PKNS-4 | 360 | 1,45 |

4.3 Herstellung von sulfoniertem und aminiertem PEEK

Man löst in einer 3-Hals-Glas-Rührapparatur 5 g nitriertes und sulfoniertes PEEK (PKNS-4) in 100 ml DMF. Danach gibt man 8 g Natriumdithionit zur Reaktionsmischung. Danach erhöht man die Temperatur auf 150°C und rührt die Reaktionsmischung 6h bei dieser Temperatur. Danach filtriert man die Lösung, und nach der Abkühlung wird die Reaktionsmischung in einem HCl/Methanolgemisch (Mischungsverhältnis Methanol:Salzsäure 37%=8:2) ausgefällt. Das ausgefallene Polymer wird mit VE-Wasser mehrmals gewaschen und danach getrocknet.

Das Polymer hat eine Ionenaustauscherkapazität von 1,27 meq SO$_3$H/ Polymer.

4.4 Membranherstellung aus nitriertem und sulfoniertem PEEK und Charakterisierung

Zur Herstellung der Kationenaustauschermembran wurden 3g des nach dem Verfahren von Beispiel 4.2 modifizierten Polyetheretherketons in NMP gelöst. Die hergestellte Polymerlösung wurde abfiltriert. Die transparente Lösung wurde auf einer Glasplatte ausgerakelt. Dann wurde der Film mit der Glasplatte in einem Ofen plaziert, und das Lösungsmittel wurde bei 120 °C abgedampft. Danach wurde die Membran von der Glasplatte abgelöst, und danach wurden ihre für den Einsatz in Elektromembranverfahren relevanten Eigenschaften experimentell ermittelt (Ionenaustauscherkapazität IEC, Flächenwiderstand $R_a$(H$^+$/Na$^+$) und Permselektivität PS).

In der Tab. 3 sind die Charakterisierungsergebnisse verzeichnet. Man kann aus Tab. 3 entnehmen, daß die Eigenschaften der neuentwickelten Membranen vergleichbar mit kommerziellen Kationenaustauschermembranen [7] sind.

Tab.3: Herstellung und Charakterisierung der Membranen

| Probe-Nr | Material | LM | IEC(meq/g) | d($\mu$m) | $R_a$(½·cm$^2$)H$^+$/Na$^+$ | PS(%) |
|---|---|---|---|---|---|---|
| MPKNS1 | PKNS-1 | NMP | 0.78 | 28 | 0.979/6.12 | 98 |
| MPKNS2 | PKNS-2 | NMP | 0.82 | 17 | 0.426/3.05 | 98 |
| MPKNS3 | PKNS-3 | NMP | 0.96 | 26 | 0.180/1.01 | 97 |
| MPKNS4 | PKNS-4 | NMP | 1.45 | 35 | 0.093/0.53 | 98 |
| Bemerkungen:<br>d= Dicke der Membran<br>$R_a$(½·cm$^2$)H$^+$/Na$^+$= Flächenwiderstand der Membran, gemessen in 0.5 H$_2$SO$_4$ und 0.5 NaCl mit Impedanzspektroskopie<br>PS= Permselektivität, gemessen in 0.1N/0.5N NaCl-Lösung | | | | | | |

4.5 Anwendungstest in einer PEM-Brennstoffzelle

Die Membran MPKNS4 aus 4.4 wurde in eine PEM-Brennstoffzelle, die vom Institut für Chemische Verfahrenstechnik selbst aufgebaut ist, eingebaut. Auf die Membran wurden kommerzielle e-tek Elektroden kalt aufgepreßt. Der Druck an der $H_2$-Seite betrug 2,1 bar, der $O_2$-Druck betrug 2,3 bar. Die Zelltemperatur lag bei 60-80°C. Die Leistungsdaten der PEM-Brennstoffzellen betrugen: 700 mV Spannung bei einer Stromdichte von 120 mA/cm$^2$. Die Membran erwies sich bis zu einer Temperatur von 60-80 °C während eines Dauertestes über einen Zeitraum von 600 Stunden als stabil.

**Patentansprüche**

1. Verfahren zur Herstellung von nitrierten und sulfonierten Aryl-Hauptkettenpolymeren, **dadurch gekennzeichnet, daß** das Arythauptkettenpolymer, das aus den in Abb. 4 aufgeführten Bausteinen zusammengesetzt sein kann, in 90-100%iger Schwefelsäure aufgelöst wird, danach die 70-100%ige Salpetersäure hinzugefügt wird, und die Temperatur T = 0-30°C so niedrig gewählt wird, daß nur Nitrierung und keine Sulfonierung stattfindet und zur anschliessenden Durchführung der Sulfonierung das Produkt nochmals in Schwefelsäure aufgelöst und bei einer höheren Temperatur, sulfoniert wird.

2. Verfahren zur Herstellung von nitriertem und sulfoniertem Arylhauptkettenpolymer, **dadurch gekennzeichnet, daß** das Arylhauptkettenpolymer, welches aus den in Abb. 4 und Anspruch 1 aufgeführten Bausteinen zusammengesetzt sein kann, in einem Reaktionsschritt nitriert und sulfoniert wird, indem das Polymer in 90-100%iger Schwefelsäure aufgelöst wird, die gewünschte Menge 70-100%ige Salpetersäure zugefügt wird, und die Temperatur so gewählt wird, daß gleichzeitig oder in unmittelbar hintereinander stattfindenden Schritten Nitrierung und sulfonierung stattfinden.

3. Nitriertes und sulfoniertes Polymer erhältlich nach den Ansprüchen 1 und 2, **dadurch** gekennzeichet daß das Verhältnis $SO_3H/NO_2$ im Polymer von 1% $SO_3H$ und 99% $NO_2$ bis 1% $NO_2$ und 99% $SO_3H$ variiert wird; wobei der Modifikationsgrad des Polymers von 0,1 $SO_3H$- und $NO_2$ -Gruppen pro Polymer-Wiederholungseinheit bis 2 pro Repetiereinheit des Polymers eingestellt wird.

4. Verfahren zur Herstellung von aminiertem und sulfoniertem Arylpolymer, **dadurch gekennzeichnet, daß** die Nitrogruppen des mittels der Ansprüche 1 und 2, hergestellten sulfonierten und nitrierten Arylpolymers mittels gängiger Methoden zu primären Aminogruppen reduziert werden.

5. Verfahren nach Anspruch 4, **dadurch gekennzeichnet, daß** die primären Aminogruppen des sulfonierten und aminierten Arylpolymers quarternisiert werden.

6. Verfahren zur Herstellung von Polymermembranen, **dadurch gekennzeichnet, daß** die Polymer gemäß Ansprüchen 3 und 5 mittels üblicher Verfahren zu dichten oder porösen Flachmembranen verarbeitet werden.

7. Verfahren zur Herstellung von Polymermembranen nach Anspruch 6, **dadurch gekennzeichnet, daß** die Polymere mittels üblicher Verfahren zu assyminetrischen porösen Kapillarmembranen oder zu integralassymmetrischen dichten Kapillarmembranen verarbeitet werden.

8. Blends aus den mittels Ansprüchen 3-5 erhältlichen Polymeren, **dadurch gekennzeichnet, daß** diese untereinander beliebig kombiniert werden.

9. Blends, die aus den in Anspruch 8 aufgeführten Komponenten und weiteren Polymeren bestehen, **dadurch gekennzeichnet, daß** die weiteren Polymere aus der Gruppe der Polyimide, Polyetherimide, Polyamide, Polyethersulfone oder Polyphenylenoxide ausgewählt werden.

10. Blends nach Anspruch 8, **dadurch gekennzeichnet,daß** als weitere Polymere Polyetherimide, Polyamide und PES bevorzugt werden.

11. Blendmembranen erhältlich aus den mittels den Ansprüchen 8-10 hergestellten Polymerblends, **dadurch gekennzeichnet, daß** die Blendkomponenten zusammen in einem geeigneten Lösungsmittel aufgelöst werden und die Polymerlösung danach mittels üblicher Verfahren zu einer dünnen Polymermembran verarbeitet wird.

12. Anwendungen wie Biennstoffzellen, Membranelektrolyse, Elektrodialyse, Diffusionsdialyse, Pervaporation, Perstraktion, Gastrennung, Ultrafiltration, Mikrofiltration, Nanofiltration, **dadurch gekennzeichnet, daß** darin die in den Ansprüchen 3-11 **gekennzeichnet**en oder erhältlichen Polymere und Membranen zum Einsatz kommen.

**13.** Sulfoniertes und animiertes Polymer erhältlich nach den Verfahren gemäss den Ansprüchen 4 und 5.

**Claims**

**1.** A process for preparing nitrated and sulfonated polymers having aryl backbone chains, **characterized in that** the polymer having an aryl backbone chain, which may be composed of the structural elements illustrated in Fig. 4, is dissolved in 90 - 100 % sulfuric acid, subsequently 70 - 100 % nitric acid is added and the temperature is selected at T = 0 - 30 °C, that only a nitration and no sulfonation takes place and that thereafter the resulting product is redissolved in sulfuric acid in order to perform the sulfonation and is sulfonated at a higher temperature.

**2.** A process for the preparation of a nitrated and sulfonated polymer having an aryl backbone chain, **characterized in that** the polymer having an aryl backbone chain which may be composed of the structural elements illustrated in Fig. 4 and claim 1 is nitrated and sulfonated in one reaction step by dissolving the polymer in 90 - 100 % sulfuric acid, adding the desired quantity of 70 - 100 % nitric acid and selecting the temperature such that the nitration and sulfonating occur simultaneously or in immediately successive steps.

**3.** A nitrated and sulfonated polymer obtainable according to claims 1 and 2, **characterized in that** the $SO_3H/NO_2$ ratio within the polymer is varied from 1% of $SO_3H$ and 99 % of $NO_2$ to 1 % of $NO_2$, and 99 % of $SO_3H$, the degree of modification of the polymer being adjusted from 0.1 $SO_3H$ and $NO_2$ groups per polymer repeating unit to 2 $SO_3H$ and $NO_2$ groups per repeating unit of the polymer.

**4.** A process for the preparation of an aminated and sulfonated aryl polymer, **characterized in that** the nitro groups of the sulfonated and nitrated aryl polymer prepared according to claims 1 and 2 are reduced to primary amino groups by standard methods.

**5.** The process according to claim 4, **characterized in that** the primary amino groups of the sulfonated and aminated aryl polymer are quaternized.

**6.** A process for the preparation of polymer membranes, **characterized in that** the polymers according to claims 3 and 5 are converted into dense or porous sheet membranes by conventional methods.

**7.** The process for the preparation of polymer membranes according to claim 6, **characterized in that** the polymers are converted into asymmetrical porous capillary membranes or integral-asymmetrical, dense capillary membranes by conventional methods.

**8.** Blends of the polymers obtainable according to claims 3, 4 and 5, **characterized in that** the blends can arbitrarily be combined with one another.

**9.** Blends consisting of the components listed in claim 8 and additional polymers, **characterized in that** the additional polymers are selected from the group consisting of polyimides, polyether imides, polyamides, polyethersulfones, or polyphenylene oxide.

**10.** The blends according to claim 8, **characterized in that** polyether imides, polyamides, and PES are preferred as additional polymers.

**11.** Blend membranes made from the polymer blends produced according to claims 8 -10, **characterized in that** the blend components are dissolved together in a suitable solvent and thereafter the polymer solution is converted into a thin polymer membrane using conventional processes.

**12.** Applications such as fuel cells, membrane electrolysis, electrodialysis, diffusion dialysis, pervaporation, perstraction, gas separation, ultrafiltration, microfiltration, nanofiltration, **characterized in that** the polymers and membranes **characterized in** or available according to claims 3 - 11 are employed.

**13.** Sulfonated and aminated polymer obtainable according to the processes according to claims 4 and 5.

**Revendications**

1. Procédé pour la préparation de polymère arylique nitrés et sulfonés, **caractérisée en ce que** le polymère arylique peut être composé des éléments énumérés à la figure 4, dissous dans 90-100% d'acide sulfurique, suivi par de l'acide nitrique de 70 à 100%, et une température choisie si bas T = 0-30 ° C pour que seulement la nitration est lieu mais pas la sulfonation puis la sulfonation se fait ultérieurieurement en dissolvant le produit dans l'acide sulfurique et à une température plus élevée.

2. Procédé pour la préparation de polymère arylique nitré et sulfonés, **caractérisée en ce que** le polymère arylique peut être composé des éléments énumérés à la figure 4 et la revendication 1, qui est nitré et sulfoné en une seule étape de réaction dissous dans 90 à 100% d'acide sulfurique, où est ajouté entre 70 à 100% d'acide nitrique et la température est choisie de telle sorte que se déroulent simultanément ou en succession immédiate les étapes de nitration et de sulfonation.

3. Polymère nitruré et sulfoné obtenu selon les revendications 1 et 2, dans lequel le ratio $SO_3H/NO_2$ dans le polymère varie de 1% pour le $SO_3H$ et 99% pour le $NO_2$ jusqu'à 1% de $NO_2$ et 99% de $SO_3H$, avec une modification du degré du polymère allant de 0,1 pour le groupe $SO_3H$ et le groupe $NO_2$ jusqu'à 2 par répétition du polymère.

4. Procédé pour la préparation des polymères aryles sulfonés et aminés, **caractérisée en ce que** la réduction de groupes nitriques est produite selon les revendications 1 et 2, nitrurés et sulforés en utilisant les méthodes actuelles de réduction en groupes aminés primaires.

5. La méthode de la revendication 4, dans laquelle les groupes aminés primaires des polymères aryles sulfonés et aminés sont quatemisés.

6. Procédé pour la préparation de membranes polymères **caractérisé** suivant les revendications 3 et 5 et suivant les procédures habituelles de préparation de membranes planes denses ou poreuses.

7. Procédé de préparation de membranes polymères selon la revendication 6, dans laquelle les polymères sont traitées par des méthodes conventionnelles de membranes capillaires asymétriquement poreuses ou de membranes capillaires symétriquement étanches.

8. Les mélanges de polymères obtenus par voie de revendications 3 à 5 **caractérisé en ce que** ils sont combinés les uns avec les autres.

9. Mélanges, qui sont composées des polymères et ses autres éléments figurant dans la revendication 8, **caractérisé en ce que** les polymères sont choisi dans le groupe des polyimides, polyéther, polyamide, polyéther ou polyphénylène.

10. Mélange selon la revendication 8, **caractérisé par** des polymères polyétherimide, les polyamides et du PES.

11. Membrane mélangée obtenue en utilisant les mélanges de polymères produits selon les revendications 8-10, **caractérisée en ce que** les composants du mélange sont dissous dans un solvant approprié et la solution de polymère est ensuite traitée selon les procédures classiques pour former une membrane mince de polymère.

12. Des applications telles que les piles à combustible, les membranes à électrolyse, électrodialyse, dialyse par diffusion, pervaporation, perstraction, de séparation de gaz, d'ultrafiltration, microfiltration, nanofiltration, **caractérisées** dans les revendications 3 à 11 ou des membranes et des polymères obtenus pour utilisation.

13. Polymère sulfoné et aminé obtenue selon selon les revendications 4 et 5.

Abb. 1:     Herstellung von nitriertem PEEK

EP 1 076 674 B1

Abb. 2: Herstellung von nitriertem und sulfoniertem PEEK

9

Abb. 3:  Aminiertes und sulfoniertes PEEK aus sulfoniertem und nitriertem PEEK

$R_{aromatisch}$:

$R_1$:

$R_3$
C
$R_3$

$R_2$:

$\left[\phantom{xx}\begin{matrix}R_4\\ \\R_4\end{matrix}\phantom{xx}\right]_x$

$R_{Brücke}$ =:

$R_5$:   O

$R_6$:   $\overset{\displaystyle O}{\underset{\displaystyle O}{S}}$

$R_7$:   $\overset{\displaystyle C}{\underset{\displaystyle O}{}}$

$R_8$:   S

Abb. 4:      Bausteine von Arylhauptkettenpolymeren